# EUROPÄISCHE PATENTSCHRIFT

(11) **EP 1 148 398 B1**
(45) Veröffentlichungstag und Bekanntmachung des Hinweises auf die Patenterteilung: **23.11.2005**
(21) Anmeldenummer: 01107924.1
(22) Anmeldetag: 28.03.2001
(51) Int. Cl.: G05B 19/042, G05B 19/18

(54) **Eingabeverfahren für die Programmierung von industriellen Steuerungen**
Input method for the programmation of industrial control systems
Procédé de saisie de données pour la programmation de dispositifs de commande industriels

(30) Priorität: 10.04.2000 DE 10017775
(43) Veröffentlichungstag der Anmeldung: 24.10.2001
(73) Patentinhaber: SIEMENS AKTIENGESELLSCHAFT, 80333 München (DE)
(72) Erfinder: Hammer, Josef, 91336 Heroldsbach (DE); Nagy, Peter, 1118 Budapest (HU); Blümel, Rolf, 04910 Elsterwerda (DE); Grzonka, Holger, 91056 Erlangen (DE)

(56) Entgegenhaltungen:
- EP-A- 0 774 701
- EP-A- 0 813 131
- WO-A-92/02871
- WO-A-97/25661
- US-A- 4 646 228
- US-A- 4 891 763
- US-A- 5 321 603

## Beschreibung

Die Erfindung bezieht sich auf Eingabeverfahren für die Programmierung von Achsbewegungen bei industriellen Steuerungen, die neben manuellen Eingabehilfsmitteln einen Bildschirm zum Visualisieren des Eingabeprozesses und zum Anzeigen resultierender Vorgänge aufweisen.

Es ist bekannt, sowohl für die Steuerung eines technischen Prozesses als auch für die Steuerung der Bewegung einer Verarbeitungsmaschine graphische Eingabehilfsmittel sowie einen Bildschirm zur Visualisierung zu verwenden (Hans D. Kief: "NC/CNC Handbuch", 1995/96, Hanser Verlag, Seite 297, Bild 1 bzw. Seite 318, Bild 3). So kann ein Anwender z.B. Geometrie- und/oder Technologieinformationen graphisch eingeben und sichtbar machen. Diese Graphiken, die z.B. eine Werkstückgeometrie anzeigen, werden direkt für die Programmierung der Steuerung verwendet.

Bei klassischen Produktionsmaschinen geht es weniger um die Bearbeitung eines Werkstücks, sondern um das Zusammenspiel von zwei oder mehr Achsen für die Durchführung des angestrebten Produktionsprozesses. Dabei werden von der Steuerung unterschiedlichste Funktionen, wie Positionieren, Gleichlauf, Kurvenscheibenverhalten, sowie die Einbindung von zeit- und wegabhängigen Bedingungen und Ereignissen, als auch deren kombinatorische Handhabung ermöglicht.

Die heutigen Eingabeverfahren richten sich in erster Linie an den Elektriker bzw. Elektroniker, der die vom Maschinenbau vorgegebenen Aufgaben in Form einer Programmierung in eine für die Steuerung verständliche Sprache umsetzt. Die Sichtweise eines Maschinenbauers, d.h. eines Maschinenkonstrukteurs, wird durch diese Art der graphischen Programmierung und Visualisierung aber nur unzureichend unterstützt.

Des Weiteren ist aus der Druckschrift WO 92/02871 A ein Eingabeverfahren für die Programmierung von Achsbewegungen bei kinomatographischen Geräten bekannt. Dabei werden dem Anwender editierbare Leerdiagramme für Weg-Zeit-Verläufe angeboten. Die Weg- und Zeitgrenzen können individuell festgelegt werden. Daraufhin lassen sich Weg-Zeit-Verläufe in die Diagramme mit Eingabehilfsmitteln einzeichnen. Schließlich wird daraus automatisch ein Programm für den Filmproduktionsprozess generiert.

In der Druckschrift US 4,891,763 ist ferner eine Vorrichtung zum Editieren eines NC-Steuerpragramms. Offenbart. Dabei sollen Quantisierungsfehler auf ein akzeptables Maß reduziert werden. Das Programm kann auf unterschiedliche Weisen numerisch editiert werden.

Der Erfindung liegt daher die Aufgabe zugrunde, ein Eingabeverfahren zur Verfügung zu stellen, welches bereits die Vorgehensweise bzw. Denkweise des Maschinenbauers unterstützt und somit die Eingabe für einen Maschinenbauer wesentlich vereinfacht.

Gemäß der Erfindung wird diese Aufgabe für ein Verfahren der eingangs genannten Art dadurch gelöst, dass folgende Schritte aufeinanderfolgend durchgeführt werden:
a) Dem Anwender wird mindestens ein editierbares Leerdiagramm für Weg-Weg-Beziehungen für mindestens ein Paar von Leit- und Folgeachsen angezeigt,
b) die Weggrenzen und/oder Wegeinheiten werden bedarfsweise festgelegt,
c) mit den Eingabehilfsmitteln wird die Weg-Weg-Beziehung in das Diagramm eingezeichnet,
d) von der Steuerung wird gemäß den Schritten a bis c das Steuerungsprogramm und/oder der Steuerungscode für den Produktionsprozess generiert,
wobei sich editierte Änderungen automatisch auf das Steuerungsprogramm bzw. den Steuerungscode auswirken.

Ein wesentlicher Vorteil dieses Eingabeverfahrens für die Programmierung von Achsbewegungen bei industriellen Steuerungen liegt darin, dass die Sicht- und Denkweise eines Maschinenbauers, nämlich das Denken in abstrakten Achsbewegungen, unterstützt wird. Ein Anwender kann bei dieser Art der Steuerungsprogrammierung in mit Hilfe der manuellen Eingabehilfsmittel auf einfache Weise die Beziehungen von Leit- und Folgeachsen eintragen.

In einer vorteilhaften Ausführungsform kann der Anwender auch den Weg-Zeit-Verlauf von Achsbewegungen in Weg-Zeit-Diagrammen eintragen.

Die Visualisierung seiner Eingaben erfolgt daher innerhalb vorher festgelegter Weg- und/oder Zeitgrenzen. Der Anwender hat also die Möglichkeit, sich auf Weg- bzw. Zeitintervalle zu konzentrieren. Er kann sich somit bei der Programmierung komplexer Bewegungsverläufe auf Teilabschnitte fokussieren. Weiterhin darf der Anwender bei der Beschriftung von Abszisse und Ordinate der Leerdiagramme die für ihn jeweils günstigste Weg- bzw. Zeiteinheit wählen.

Der Anwender kann die Bewegungen unterschiedlicher Achsen derselben Maschine in jeweils separaten Diagrammen darstellen. Dies erleichtert die Programmierung, da vom Anwender die Bewegungsabläufe einer Achse bzw. die Beziehungen von Leit- und Folgeachse separat und nacheinander bearbeitbar sind.

Ein weiterer Vorteil liegt darin, dass im selben Diagrammtyp unterschiedliche Achsbewegungsformen, wie z.B. Achspositionierung, Gleichlauf oder Kurvengleichlauf dargestellt werden können.

Ein weiterer Vorteil der Erfindung liegt darin, dass nach Eingabe der Weg-Zeit-Verläufe der jeweiligen Achsen und/oder Eingabe der Weg-Weg-Beziehungen für Paarungen von Leit- und Folgeachsen automatisch aus den Diagrammen eine entsprechende Steuerungssprache bzw. ein Steuerungsprogramm und/oder der Steuerungscode für die Steuerung generiert werden kann. Die Umsetzung in eine für die Steuerung verständliche Sprache wird dadurch zur Systemleistung. Die Steuerungssprache kann in Form einer höheren Programmiersprache, aber auch grafischer Form (z.B. als Ablauf- oder Flussdiagramm) vorliegen.

Ein weiterer bedeutender Vorteil der Erfindung liegt darin, dass durch eine durchgängige integrierte Toolkette:
- genannten Eingabeverfahren
- Steuerungssprache
- Steuerungscode
der Anwender zum einen im klassischen Forward-Engineering unterstützt wird, zum anderen auch vom Anwender in einer späteren Phase gemachte Änderungen automatisch in den vorhergehenden nachgezogen werden. Dadurch wird der Anwender auch im Round-Trip-Engineering unterstützt, d.h. Änderungen, die der Elektriker in der Programmierung (Ebene der Steuerungssprache) vornimmt, werden in der Notation des Maschinenbauers (genanntes Eingabeverfahren) mitgeführt. Auf allen Ebenen wird somit die Konsistenz sowohl in Vorwärts-, als auch in Rückwärtsrichtung sichergestellt.

Eine erste Ausgestaltung der vorliegenden Erfindung liegt darin, dass in die Diagramme für Weg-Zeit-Verläufe Achspositionierabschnitte und/oder Achsgleichlaufabschnitte eingetragen werden. Der Anwender hat damit die Möglichkeit, den zeitlichen Ablauf von Positionier- und Gleichlauf-Verläufen in einem Diagramm, d.h. auf einen Blick präsentiert zu bekommen. Ein weiterer Vorteil dieser gemeinsamen Darstellung liegt darin, dass auf Grundlage dieses Diagramms die dazugehörigen Ableitungen (Geschwindigkeit, Beschleunigung und Ruck) berechnet und visualisiert werden können.

Eine weitere vorteilhafte Ausgestaltung der vorliegenden Erfindung liegt darin, dass mit den Eingabehilfsmitteln Symbole für Ereignisse und Kontrollanweisungen für die Weg-Zeit-Verläufe und/oder die Weg-Weg-Beziehungen in die Diagramme eingetragen werden. Dadurch können die Achsenbewegungen als Reaktion auf externe Ereignisse dargestellt werden und außerdem lassen sich durch das Einbringen von Kontrollanweisungen oder Logikbedingungen komplexe und/oder abhängige Achsverläufe modellieren.

Eine weitere vorteilhafte Ausgestaltung der Erfindung liegt darin, dass die in den Ereignis- und Kontrollsymbolen hinterlegte Steuerungsinformation mit den Eingabehilfsmitteln in einem Teil- oder einem Unterbild korrelierend zu den Diagrammen visualisierbar sind. Dadurch stehen einem Anwender in einfacher und ergonomischer Weise weitere Detailinformationen zur Verfügung, die in seinem jeweils aktuellen Arbeitsschritt Relevanz haben.

Eine weitere vorteilhafte Ausgestaltung der Erfindung liegt darin, dass die erste und/oder zweite und/oder dritte Ableitung der Weg-Zeit-Verläufe steuerungsseitig auf dem Bildschirm visualisiert werden. Durch diese Darstellung von Geschwindigkeits-, Beschleunigungs- und Ruckdiagramm läßt sich die Verifikation des dynamischen Verhaltens der gesteuerten Achse kontrollieren. Das System kennt nämlich die physikalischen Grenzwerte jeder Achse und läßt solche Bewegungsabläufe einfach nicht zu, die eine größere Dynamik verlangen würden.

Eine weitere vorteilhafte Ausgestaltung der Erfindung liegt darin, dass jeweils eine der visualisierten Ableitungen mit den Eingabehilfsmitteln durch Umzeichnen bearbeitet wird und die Auswirkungen auf die anderen zugehörigen Ableitungen sowie auf den Ausgangs-Weg-Zeit-Verlauf für die Steuerung visualisiert wird. Der Anwender hat dadurch die Möglichkeit, interaktiv mit den Eingabehilfsmitteln die vom System generierten Ableitungen entsprechend der Bewegungsaufgabe weiter zu optimieren. Die Auswirkungen dieser anwenderseitig angebrachten Modifizierungen auf die anderen zugehörigen Ableitungen sowie auf den erreichten Ausgangs-Weg-Zeit-Verlauf einer Achse werden nach Ende der Eingabe steuerungsseitig prompt visualisiert. Dadurch kann der Anwender die Auswirkungen von eingebrachten Änderungen sofort in visueller Weise beurteilen.

Eine weitere vorteilhafte Ausgestaltung der Erfindung liegt darin, dass in einem Gesamtschaubild mehrere bis alle Weg-Zeit-Verläufe in einer zeitsynchronen Darstellung in einem Teilbild oder einem Unterbild visualisiert werden und mit den Eingabehilfsmitteln korrelierbar sind. Der Anwender hat dadurch die Möglichkeit, die Weg-Zeit-Verläufe aller Achsen, bzw. einer Teilmenge davon in einer Gesamtsicht mit einer zeitsynchronen Darstellung zu begutachten. Er kann dadurch sehr übersichtlich sehen, wo sich zu einem bestimmten Zeitpunkt die im System befindlichen Achsen befinden. Mit Hilfe der Eingabehilfsmittel kann der Anwender auf einfache Weise den synchronen Start von Bewegungen mehrerer Achsen spezifizieren. Der Anwender hat dadurch die Möglichkeit, hinsichtlich der Bewegungsaufgabe weitere Optimierungen einzubringen.

Eine weitere vorteilhafte Ausgestaltung der Erfindung liegt darin, dass dabei auch mehrere bis alle Weg-Weg-Beziehungen visualisierbar sind. Dadurch ist es für den Anwender möglich, alle Weg-Weg-Beziehungen von Leit- und Folgeachse, die im System vorhanden sind bzw. eine Teilmenge davon in einem Übersichtsbild zu betrachten.

Eine weitere vorteilhafte Ausgestaltung der Erfindung liegt darin, dass dem Anwender kontextabhängig eine Toolleiste mit verschiedenen Zeichenelementen zum Eintragen der Weg-Zeit-Verläufe und/oder Weg-Weg-Beziehungen bereitgestellt wird. Mit Tastatur, Maus oder sonstigen Eingabehilfsmitteln, wie z.B. Lichtgriffel kann der Anwender die Toolleiste bedienen und dabei sehr schnell Achsverläufe erzeugen. Die Kontextabhängigkeit erhöht dabei die Effizienz des Anwenders, denn ihm werden nur solche Zeichenelemente zur Verfügung gestellt, die er in der momentanen Eingabesituation auch wirklich sinnvollerweise benötigt.

Eine weitere vorteilhafte Ausgestaltung der Erfindung liegt darin, dass bei den Weg-Weg-Beziehungen Punkte und/oder Bereiche qualitativ vorbestimmbarer Synchronität eintragbar sind. Der Anwender hat dadurch die Möglichkeit, innerhalb des Diagramms für die Weg-Weg-Beziehungen von Leit- und Folgeachse mit Hilfe der Eingabehilfsmittel Punkte für den Beginn eines Auf- bzw. Absynchronisierens anzugeben. Die Synchronisationsbereiche (Beginn bis Ende des Auf- bzw. Absynchronisierens) werden dabei vom System auf Basis der zugrundeliegenden Verhältnisse berechnet und in den entsprechenden Bereich der Abszisse, auf der die Bewegung der Leitachse beschrieben wird, graphisch dargestellt. Durch diese Graphikelemente kann sich der Anwender bezüglich der Synchronität der bei einer Bewegungsabfolge beteiligten Achsen sehr gut eine Vorstellung machen und auf Basis dieser Informationen weitere Optimierungen einbringen.

Eine weitere vorteilhafte Ausgestaltung der Erfindung liegt darin, dass an Stelle oder zusätzlich zu Weg-Zeit-Verläufen und/oder Weg-Weg-Beziehungen beliebig andere systemimmanente Beziehungen von bis zu drei Größen als Leerdiagramm anzeigbar sind. Neben den üblicherweise in den Diagrammen verwendeten Größen wie Weg und Zeit kann man sich z.B. vorstellen, dass auch der Druckverlauf einer Einrichtung über die Zeit dargestellt werden kann.

Eine weitere vorteilhafte Ausgestaltung der Erfindung liegt darin, dass eine automatische Überwachung und/oder Visualisierung von Verstößen von Grenzwerten in den Weg-Zeit-Verläufen und/oder Weg-Weg-Beziehungen erfolgt. Durch diese systemimmanente Überwachungs- und Plausibilisierungsfunktion wird der Anwender entlastet, da er nicht selber diese Funktionen durchführen muss, er kann sich daher auf seine eigentlichen Engineeringtätigkeiten konzentrieren.

Die wesentlichen mit der Erfindung erzielten Vorteile bestehen also insbesondere darin, dass der Anwender Bewegungszusammenhänge von Achsen in graphischen Arbeitsdiagrammen formulieren kann. Dadurch läßt sich in die Programmierung von Produktionsmaschinen (prinzipiell jedoch auch bei Werkzeugmaschinen oder Robotern) eine stärkere maschinenbauerorientierte Sicht einbringen. Maschinenkonstrukteure und Maschinenbauer, die sehr stark in Weg-Zeit-Diagrammen oder in Weg-Weg-Beziehungsdiagrammen denken, können dadurch auf effiziente Art und Weise Programme für Prozeßsteuerung und insbesondere für Bewegungssteuerungen erstellen. Insbesondere wird die Effizienz dieser Art der Programmierung dadurch erhöht, dass aus den Diagrammeingaben automatisch die Programme für die Steuerungen generiert werden. Außerdem sind diese Diagramme sehr gut geeignet, um eine einheitliche und eindeutige Kommunikation zwischen Maschinenbauer und Elektrotechniker zu gewährleisten.

Ein Ausführungbeispiel der Erfindung ist in der Zeichnung dargestellt und wird im folgenden erläutert.

Dabei zeigen:
- FIG 1: ein Übersichtsbild, das Möglichkeiten der Programmierung einer Steuerung anzeigt, sowie die Verbindungen der Steuerung zu Geräten eines technischen Prozesses andeutet,
- FIG 2: ein Monitorbild mit Weg-Zeit-Verlauf einer Achse, sowie daraus abgeleiteten Diagrammen,
- FIG 3: ein Diagramm mit Weg-Weg-Beziehungen mit Synchronisierungspunkten und Synchronisierungsphasen,
- FIG 4: in Form einer Tabelle mögliche Synchronisationspunkte für Weg-Weg-Beziehungen, sowie deren Beschreibung,
- FIG 5: ein Diagramm, für den Weg-Zeit-Verlauf, mit zwei Positionierabschnitten und einem dazwischenliegenden Gleichlaufabschnitt,
- FIG 6: Eingabesymbole für die Positionierabschnitte in Weg-Zeit-Diagrammen,
- FIG 7: ein Diagramm, für den Weg-Zeit-Verlauf, in dem der Achspositioniervorgang durch ein Stop-Ereignis unterbrochen wird,
- FIG 8: ein Diagramm, für den Weg-Zeit-Verlauf, in dem der Achspositioniervorgang in Abhängigkeit einer Kontrollanweisung verändert fortgesetzt wird.

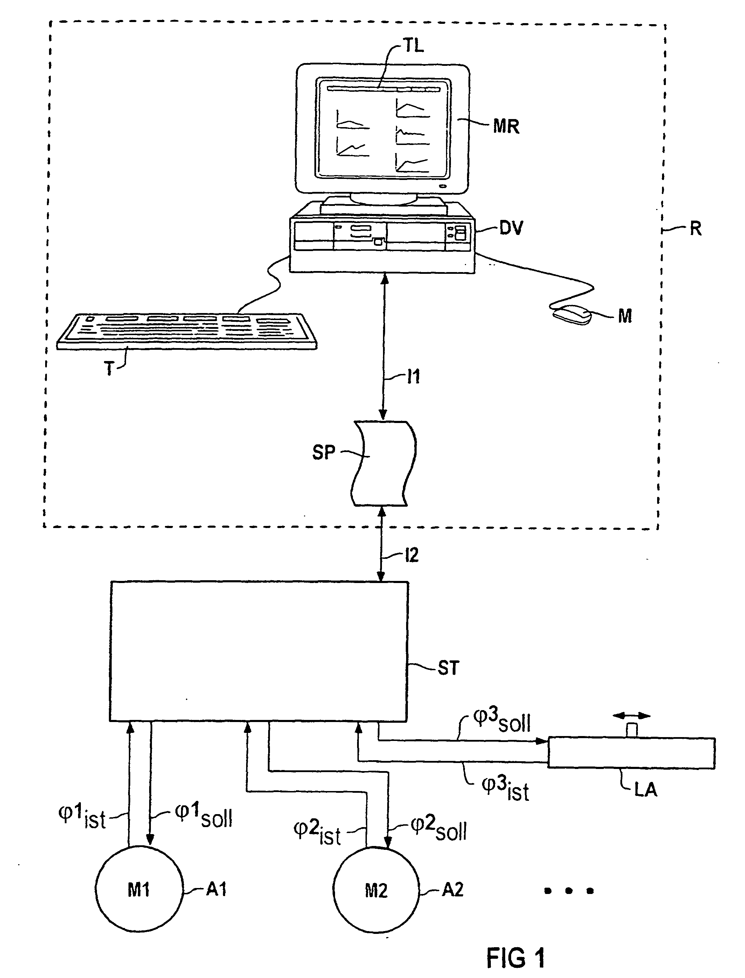

Die Darstellung gemäß FIG 1 zeigt als Übersichtsbild die Verbindung einer Steuerung ST sowohl zum technischen Prozess (Peripherie, Motore etc.) als auch zum Entwicklungssystem auf einer Rechenanlage R (z.B. PC). Üblicherweise wird einer Steuerung ST, insbesondere für die Steuerung für Bewegungsabläufe, das Steuerungsprogramm SP (in textueller oder grafischer Form)zugeführt. Dieses Steuerungsprogramm SP wird auf einer Rechenanlage R erstellt und über den bidirektionalen Informationspfad I2 in die Steuerung ST geladen Das Erstellen des Steuerungsprogramms SP auf der Rechenanlage R und das Laden des Steuerungsprogramms über den Informationspfad I2 auf die Steuerung ST ist die klassische Vorgehensweise, die üblicherweise verwendet wird.

Die Intelligenz der Steuerung ST kann auch ganz oder teilweise in die Rechenanlage R integriert sein kann. Eingabehilfsmittel der Rechenanlage R sind eine Tastatur T sowie eine Maus M. Zur Visualisierung von Benutzereingaben sowie zur Darstellung von Berechnungsergebnissen wird ein Monitor MR verwendet. Als visuelles Eingabehilfsmittel steht eine Toolleiste TL dem Anwender zur Verwendung, die er mit Hilfe der Maus M verwenden kann. An Stelle der Maus M können selbstverständlich Lichtgriffel, Touchsensorik o.ä. treten. Die Informationsverarbeitung innerhalb der Rechenanlage R geschieht in der Datenverarbeitungseinheit DV. In FIG 1 sind die Elemente der Rechenanlage R innerhalb der gestrichelten Linie dargestellt. Auch das Steuerungsprogramm SP ist innerhalb der gestrichelten Linie dargestellt, da es auf der Rechenanlage erzeugt wird.

Die Programmierung von Produktionsmaschinen in einer Steuerungssprache bzw. mit einem Steuerungsprogramm unterstützt in erster Linie die Sichtweise eines Elektrikers bzw. Elektronikers. Um auch die Sicht- und Denkweise eines Maschinenbauers zu unterstützen, kann der Anwender mit den Eingabehilfsmitteln den Weg-Zeit-Verlauf einer Achse sowie Weg-Weg-Beziehungen mehrerer Achsen erzeugen und sich auf dem Monitor MR darstellen lassen. Diese graphischen Benutzereingaben werden von der Rechenanlage R in ein Steuerungsprogramm SP umgewandelt, d.h. über den Informationspfad I1 in das Format eines Steuerungsprogramms SP überführt. Über den Informationspfad I2 erfolgt die weitere Übertragung zur Steuerung ST. Ein Compiler erzeugt aus dem Steuerungsprogramm den ablaufbaren Steuerungscode. Änderungen im Steuerungscode werden automatisch im Steuerungsprogramm und in den Eingabediagrammen nachgezogen, Änderungen im Steuerungsprogramm werden in den Eingabediagrammen und im Steuerungscode nachgezogen. Deshalb sind die Informationspfade I1 und I2 bidirektional dargestellt. Über die Informationspfade I1 und I2 kann die Rechenanlage R darüber hinaus von der Steuerung ST aktuelle Informationen über den Zustand des technischen Prozesses erhalten.

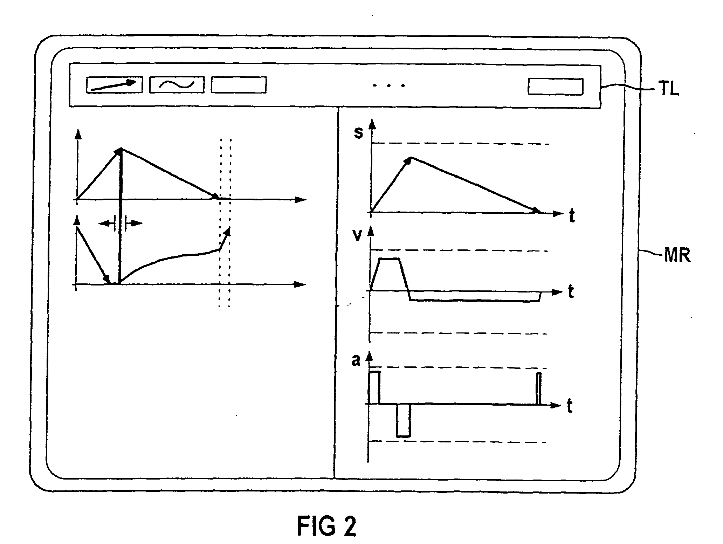

Die folgenden Geräteeinheiten werden beispielhaft zur Steuerung eines technischen Prozesses verwendet: zwei Antriebe A1, A2 mit den Motoren M1 und M2 sowie ein Linearmotor LA. Die Steuerung ST erhält die Informationen über die Istsituationen dieser Geräte über ϕ1ᵢₛₜ, ϕ2ᵢₛₜ und ϕ3ᵢₛₜ. Über ϕ1ₛₒₗₗ bis ϕ3ₛₒₗₗ werden die Geräte jeweils mit den Sollvorgaben der Steuerung ST versorgt. Hierbei handelt es sich um eine der Anschaulichkeit halber äußerst reduzierte Ausbildung eines technischen Prozesses. Durch drei Punkte ist angedeutet, dass weitere Geräte an der Steuerung ST bedient werden können.
Die Darstellung gemäß FIG 2 zeigt auf der rechten Seite für einen ebenfalls sehr anschaulichen Prozeß ein Monitorbild des Monitors MR mit einem Weg-Zeit-Verlauf s = f(t) einer Achse, sowie daraus abgeleiteten Diagrammen v = f'(t) und a = f"(t).

Aus dem Weg-Zeit-Diagramm s = f(t) werden die darunter angeordneten Diagramme für Geschwindigkeit v = f'(t) bzw. Beschleunigung a = f"(t) vom System automatisch generiert. In den Diagrammen bedeutet bei den Achsbeschriftungen t die Zeit, s der Weg, v die Geschwindigkeit und a die Beschleunigung der entsprechenden Achse. Darüber hinaus ist es auch möglich aus dem Weg-Zeit-Verlauf s = f(t) einer Achse, den Ruck r = f'''(t) generieren und anzeigen zu lassen.
Die Toolleiste TL, die sich in FIG 2 am oberen Ende des Monitors MR befindet, könnte auch an einer anderen beliebigen Stelle des Monitors MR vom Anwender angeordnet werden. Als Toolelemente können Linearbewegungen (durch Pfeil angedeutet), Verschleifungen (durch Sinusverlauf angedeutet) und diverse weitere Funktionen, die durch Leerfelder und drei Punkte angedeutet sind, vorgesehen sein.
Ein Anwender kann beliebig viele Weg-Zeit-Verläufe von Achsen eingeben und sich die dazugehörigen Geschwindigkeits-, Beschleunigungs- oder auch Ruckdiagramme generieren lassen. Um nicht den Überblick zu verlieren bzw. um sich einen Eindruck von der Gesamtsituation im System zu verschaffen, kann ein Anwender mehrere bis alle Weg-Zeit-Verläufe der jeweiligen Achsen in einer zeitsynchronen Darstellung in einem Gesamtschaubild erhalten. Das Teilbild des linken Bereichs des Monitors MR zeigt beispielhaft ein solches Gesamtschaubild, wobei hier zwei im System befindliche Achsen untereinander angeordnet werden. Durch senkrechte Hilfslinien (durchgehend bzw. gestrichelt) sind zeitliche Korrespondenzzeiten bzw. Zeitbereiche angedeutet. Durch das Pfeilpaar an der durchgezogenen Hilfslinie ist deren Editierbarkeit angedeutet, worauf im folgenden noch eingegangen wird.

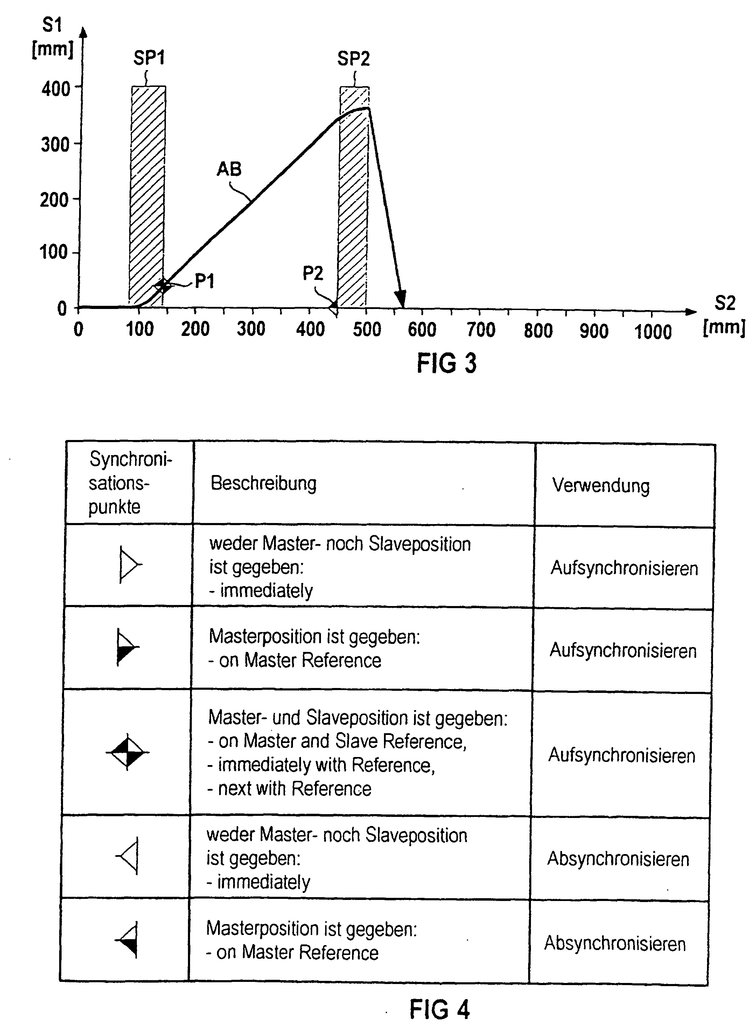

Die Darstellung gemäß FIG 3 zeigt ein Diagramm mit Weg-Weg-Beziehungen mit Synchronisationspunkten P1, P2 und Synchronisierungsphasen SP1, SP2. In dem Diagramm wird die Weg-Weg-Beziehung zweier Achsen S1 und S2 in mm-Wegen dargestellt. Der Verlauf der sich ergebenden Weg-Weg-Beziehung der Achsen S1 und S2 wird durch die Achsbahnbeschreibung AB gezeigt. Mit Hilfe von Weg-Weg-Diagrammen lassen sich insbesondere Master-Slave-Beziehungen von Achsen, d.h. Beziehungen zwischen Leit- und Folgeachse, sehr anschaulich darstellen. Der Synchronisationspunkt P1 zeigt den Beginn der Gleichlaufphase zwischen den beiden Achsen S1 und S2 an. Die Breite der dazugehörigen Aufsynchronisierungsphase SP1 wird vom System automatisch berechnet und dargestellt. Der Synchronisationspunkt P2 zeigt das Ende der Gleichlaufphase und den Beginn der Absynchronisierungsphase SP2 an. Die Länge der Absynchronisierungsphase SP2 wird vom System automatisch berechnet. Einzelheiten zu den Synchronisationspunkten werden im folgenden im Zusammenhang mit FIG 4 noch dargelegt. Für die Berechnung der Breite eines Synchronisierungsbereiches, wie er in der Darstellung schraffiert angedeutet ist, werden vom System auch dynamische Einstellungen, wie Mastergeschwindigkeit, Getriebefaktor, maximale Beschleunigung und Geschwindigkeitsprofil berücksichtigt.

In der Darstellung gemäß FIG 4 werden die einem Anwender zur Verfügung stehenden Synchronisationspunkte in Tabellenform beschrieben. Diese Synchronisationspunkte können einem Anwender über die Toolleiste TL, shortcuts o.ä. angeboten werden. In der Tabelle wird gezeigt, dass ein durch ein offenes Dreieck angedeuteter Synchronisationspunkt zum Zwecke des Aufsynchronisierens angeboten sein kann, der für Punkte verwendet wird, bei denen weder Master- noch Slave-Position gegeben sind. Eine derartige Situation kann als "immediately" bezeichnet werden. In der folgenden Zeile ist durch ein halb ausgefülltes Dreieck ebenfalls zum Zwecke des Aufsynchronisierens ein Fall angedeutet, bei dem die Master-Position gegeben ist, ein derartiges Synchronisieren kann als "on Master Reference" bezeichnet werden.

Eine dritte Möglichkeit des Aufsynchronisierens ist in der darunterliegenden Zeile angedeutet, wobei durch ein schwarzweiß kariertes Quadrat der Fall beschrieben wird, bei welchem Master- und Slave-Position gegeben sind. Hierbei liegen vor "on Master and Slave Reference", "immediately with Reference" und "next with Reference".

Für den Fall des Absynchronisierens können ebenfalls Synchronisationspunkte zum Zustand angegeben werden, bei dem weder Master- noch Slave-Position gegeben sind, d.h. zum Zustand "immediately", wobei auch hier ein Andeuten des Synchronisationspunktes mit einem offenen Dreieck angedeutet ist, wobei dieses Dreieck mit seiner Spitze jedoch nach links gewendet ist. Ebenso kann für den Fall, dass Masterposition gegeben ist, d.h. "on Master Reference", ein Synchronisationspunkt durch ein halb ausgefülltes Dreieck angedeutet werden, der, da es sich um ein Absynchronisieren handelt, mit der Spitze des Dreiecks links weisend ausgebildet ist.

Die linke Spalte von FIG 4 zeigt somit die Tools, die einem Anwender zur Synchronisation von Achsen, d.h. zur Modellierung des Gleichlaufs zur Verfügung stehen. Die in der linken Spalte von FIG 4 dargestellten Symbole kann ein Anwender zur Modellierung des Achsgleichlaufs, wie beispielweise im Diagramm gemäß FIG 3 dargestellt, als Beschreibungselemente verwenden.

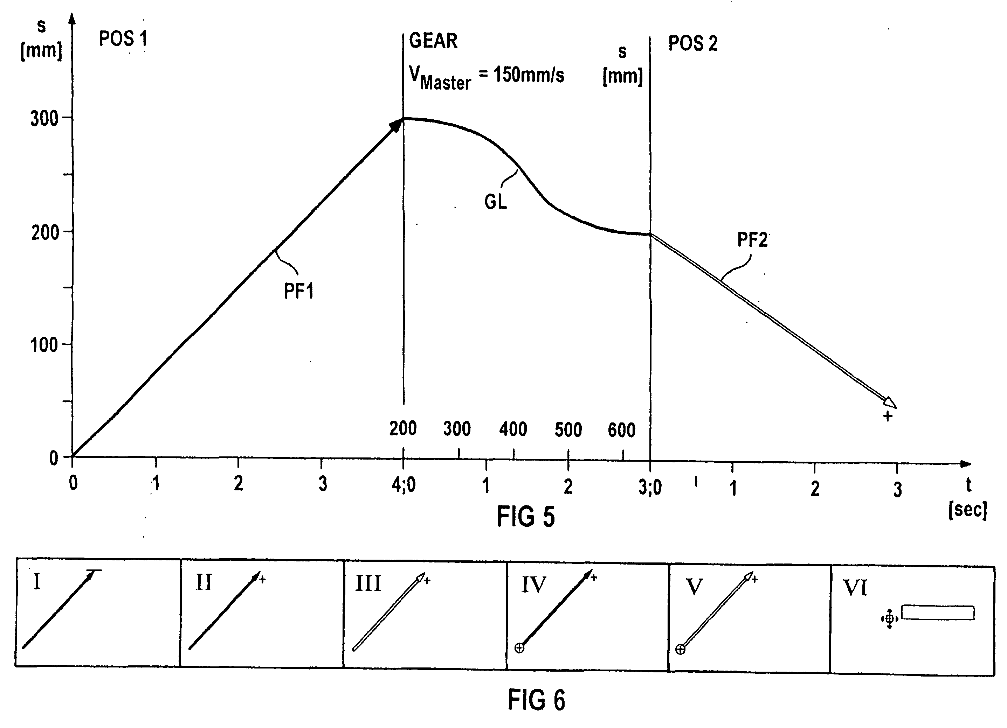

Die Darstellung gemäß FIG 5 zeigt ein Diagramm für den Weg-Zeit-Verlauf s = f(t) einer Achse. Die Zeit t (Einheit Sekunden) wird auf der Abszisse aufgetragen, der Weg s (Einheit Millimeter) auf der Ordinate. Das Diagramm besteht aus zwei Positionierabschnitten POS1 und POS2, sowie einem dazwischenliegenden Gleichlauf- bzw. Synchronisationsabschnitt GEAR. Die drei Abschnitte sind durch vertikale Linien getrennt. Jeder Abschnitt besitzt auf der Abszisse eine eigene (bei Null beginnende) Skalierung. Es ist aber auch vorstellbar, dass eine einzige über alle Abschnitte fortlaufende Skalierung verwendet wird. Im Gleichlaufabschnitt GEAR besitzt die Abszisse eine zweite Skalierung (Beschriftung oberhalb der Achse). Diese zweite Skalierung ist abhängig von der zugeordneten Masterachse.

In FIG 5 wird die Achspositionierung im ersten Positionierabschnitt POS1 durch den Positionierpfeil PF1 dargestellt. Der Positionierpfeil PF1 beginnt im Ursprung des Diagramms und endet zum Zeitpunkt t=4 in der Position s=300. Ab dieser Position geht die Achse in eine Gleichlaufphase über. Die Gleichlaufphase wird im Gleichlaufabschnitt GEAR durch die Gleichlauflinie GL dargestellt. Im Gleichlaufabschnitt wird die Achsbewegung nicht nur in Abhängigkeit von der Zeit, sondern auch in Abhängigkeit von einer Masterachse dargestellt. Die Geschwindigkeit der Masterachse (V_{Master}=150 mm/s und die dazugehörige Maßeinheit, hier der Weg s in mm) werden im oberen Teil des Gleichlaufabschnitts GEAR gezeigt. Die Gleichlauflinie GL beginnt beim Endpunkt des Positionierpfeils PF1 und endet bei (t=3, s=200; bezogen auf den Gleichlaufabschnitt GEAR). Geschwindigkeitsänderungen der Masterachse haben unmittelbaren Einfluss auf die Darstellung des Diagramms. So wird z.B. bei einer Reduzierung der Geschwindigkeit der Masterachse die Breite des Gleichlaufabschnitts GEAR entsprechend größer dargestellt. Eine zeitproportionale Darstellung der Achsbewegung im Gleichlaufabschnitt ist somit gewährleistet.

Auf den Gleichlaufabschnitt GEAR folgt der Positionierabschnitt POS2. Der Positionierpfeil PF2 beginnt im Endpunkt der Gleichlauflinie GL und endet bei (t=3, s=50; bezogen auf den Positionierabschnitt POS2). In FIG 5 wird dargestellt, dass auf einfache Art und Weise neben den zwei Parametern Weg und Zeit auch noch weitere bewegungsspezifische Parameter (z.B. die Abhängigkeit von der Geschwindigkeit der Masterachse) in Bewegungsdiagramme eingebracht werden können. Der Vorteil von Diagrammen gemäß FIG 5 liegt darin, dass in einem einzigen Diagramm Positionier- und Gleichlaufverläufe von Achsen dargestellt werden können, und dass sich aus dieser gemeinsamen Darstellung die dazugehörigen Ableitungen (Geschwindigkeit, Beschleunigung, Ruck) generieren lassen.

In FIG 5 sind in den Positionierabschnitten POS1 und POS2 jeweils zwei unterschiedliche Typen von Positionierpfeilen (PF1 und PF2) dargestellt. Der volle Positionierpfeil PF1 wird für die Positionierung einer Achse in eine absolute Position verwendet, der leere Positionierpfeil PF2 mit einem "+"-Zeichen an der Spitze wird für das Fahren einer Achse dargestellt.

In der Darstellung gemäß FIG 6 sind die einem Anwender zur Verfügung stehenden Positionierpfeile zum Einbringen von Positionierbefehlen beschrieben. Diese Positionierbefehle können einem Anwender über die Toolleiste TL, shortcuts o.ä. angeboten werden. In Teilbild I wird gezeigt, dass ein voller Pfeil mit einer Decke für die Positionierung einer Achse in eine absolute Position verwendet wird. In Teilbild II wird angedeutet, dass durch einen vollen Pfeil mit einem "+"-Zeichen an der Spitze Positionierungen relativ zur aktuellen Position dargestellt werden. Mit einem leeren Pfeil mit einem "+"-Zeichen an der Spitze aus Teilbild III wird das Fahren einer Achse dargestellt. In Teilbild IV ist ein voller Pfeil mit "+"-Zeichen an der Spitze und "+"-Zeichen in einem Kreis am Anfang dargestellt. Damit wird die Summe einer Basisbewegung und einer relativen Positionierung als überlagerte Bewegung dargestellt. Teilbild V zeigt einen leeren Pfeil mit "+"-Zeichen an der Spitze und "+"-Zeichen in einem Kreis am Anfang. Damit wird die Summe einer Basisbewegung und eines Fahr-Befehls dargestellt.

Teilbild VI zeigt eine Cursordarstellung für die Positionierung und das Ziehen der Pfeile innerhalb der Diagramme. Dieser Cursor erscheint während der Bearbeitung an der jeweiligen Pfeilspitze. Ein Anwender kann mit den Eingabehilfsmitteln, z.B. mit der Maus (M; FIG 1) den Cursor und somit den dazugehörigen Pfeil positionieren. Zugehörig zu einem Pfeil, in Teilbild VI rechts neben dem Cursor dargestellt, kann ein Informationsfeld dargestellt werden. In diesem Informationsfeld können z.B. die Bewegungsdauer bzw. Zeit- und Positionsdifferenzen (Δt und Δs) dargestellt werden.

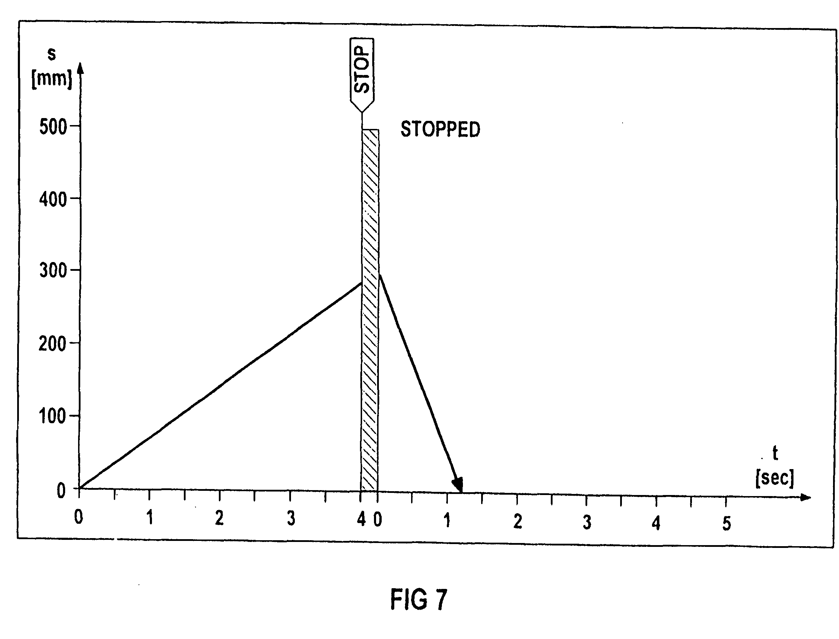

Die Darstellung gemäß FIG 7 zeigt ein Diagramm für den Weg-Zeit-Verlauf, in dem der Achspositioniervorgang durch ein Stop-Ereignis unterbrochen wird. Die Zeit t (Einheit Sekunden) wird auf der Abszisse aufgetragen, der Weg s (Einheit Millimeter) auf der Ordinate. Das Stop-Ereignis wird durch ein dunkelhinterlegtes Feld mit Spitze und der Beschriftung STOP am oberen Rand des Diagramms dargestellt. Nach Eintreffen des STOP-Ereignisses erfolgt eine Bremsphase (schraffiert dargestellt). Am Ende der Bremsphase wird der weitere Verlauf der Achsbewegung in einem neuen Abszissenabschnitt, beginnend mit t=0 dargestellt.

Das STOP-Ereignis bzw. der dazugehörige Befehl kann vom Anwender parametriert werden (z.B. durch Eingabe der maximalen Beschleunigung beim Bremsen). Die Dauer der Bremsphase wird automatisch berechnet (schraffierter Bereich). Die ursprüngliche Bewegung (Achsverlauf ohne Eintreffen eines STOP-Ereignisses) kann zusätzlich grafisch dargestellt werden.

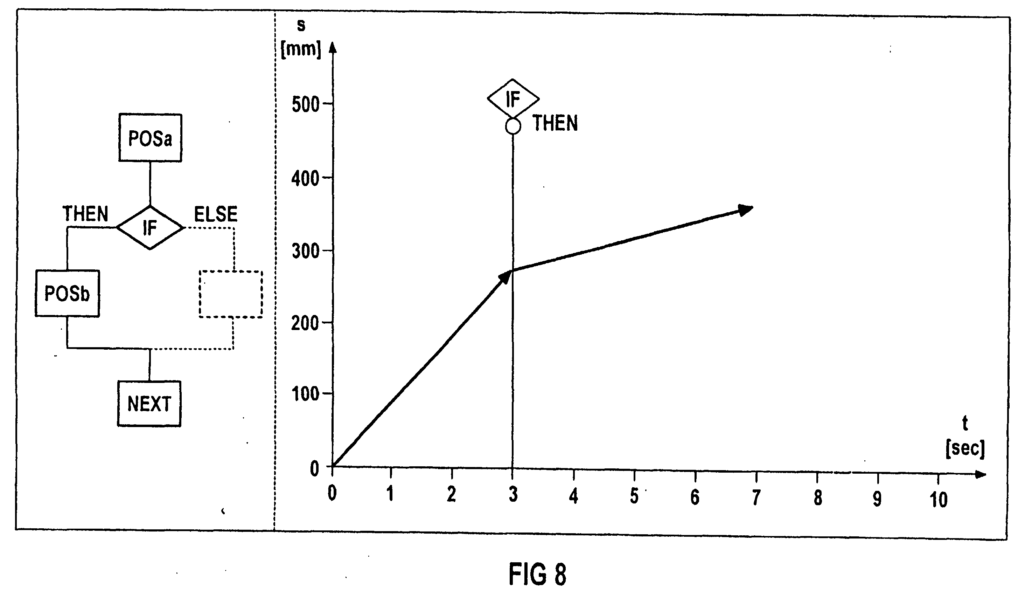

Die Darstellung gemäß FIG 8 zeigt ein Diagramm für den Weg-Zeit-Verlauf, in dem der Achspositioniervorgang in Abhängigkeit einer Kontrollanweisung verändert fortgesetzt wird. Das Diagramm ist durch eine gestrichelte Linie zweigeteilt. Der rechte Teil zeigt ein Diagramm für den Weg-Zeit-Verlauf s = f(t) einer Achse. Die Zeit t (Einheit Sekunden) wird auf der Abszisse aufgetragen, der Weg s (Einheit Millimeter) auf der Ordinate. Die Kontrollanweisung wird durch eine Raute mit der Beschriftung "IF" und einem kleinen Kreis darunter am oberen Bildrand des Diagramms dargestellt. Die Beschriftung "IF" zeigt an, dass sich hinter der Kontrollanweisung ein IF-THEN-ELSE Statement verbirgt. Die durchgehende schwarze vertikale Linie, ausgehend vom kleinen Kreis unter der Raute bis zur Abszisse teilt die Achsbewegung in den Achsverlauf vor der Kontrollanweisung und den Verlauf nach der Kontrollanweisung.

Der linke Teil des Diagramms stellt die Kontrollstruktur (IF-THEN-ELSE) in Flowchart-Notation dar: Nach Ausführung von Positionierbefehl POSa wird je nach Ergebnis der IF-Abfrage (Inhalt der Raute) entschieden, ob der THEN- oder der ELSE-Zweig durchlaufen wird. In FIG 8 wird durch die durchgezogene Linie dargestellt, dass der THEN-Zweig ausgewählt und somit der Positionierbefehl POSb ausgeführt wird. Der nicht durchlaufene ELSE-Zweig ist gestrichelt dargestellt. Vor dem Kästchen "next" werden der THEN- und der ELSE-Zweig wieder zusammengeführt. Die Achsbewegung, die aus dem ELSE-Zweig resultieren würde, kann zusätzlich grafisch dargestellt werden. Die Bezeichnung THEN (rechts neben der Raute) im Weg-Zeit-Diagramm deutet an, dass die Achsbewegung dargestellt wird, die aus dem THEN-Zweig resultiert.

## Patentansprüche

1. Eingabeverfahren für die Programmierung von Achsbewegungen untereinander bei industriellen Steuerungen, die neben manuellen Eingabehilfsmitteln einen Bildschirm zum Visualisieren des Eingabeprozesses und zum Anzeigen resultierender Vorgänge aufweisen,
**gekennzeichnet durch** die aufeinander folgenden Schritte:
a) dem Anwender wird mindestens ein editierbares Leerdiagramm für Weg-Weg-Beziehungen für mindestens ein Paar von Leit- und Folgeachsen angezeigt,
b) die Weggrenzen und/oder Wegeinheiten werden bedarfsweise festgelegt,
c) mit den Eingabehilfsmitteln (M, T, TL) wird die Weg-Weg-Beziehung in das Diagramm eingezeichnet,
d) von der Steuerung (ST) wird gemäß den Schritten a bis c das Steuerungsprogramm (SP) und/oder der Steuerungscode für den Produktionsprozess generiert,
wobei sich editierte Änderungen automatisch auf das Steuerungsprogramm (SP) bzw. den Steuerungscode auswirken.

2. Eingabeverfahren nach Anspruch 1,
**dadurch gekennzeichnet,**
**dass** ein weiteres editierbares Leerdiagramm für Weg-Zeit-Verläufe für jeweils eine Achse dem Anwender angezeigt, Weg- und Zeitgrenzen und/oder Weg- und Zeiteinheiten bedarfsgerecht festgelegt und Weg-Zeit-Verläufe in das weitere Diagramm eingezeichnet werden sowie anschließend ein entsprechendes Steuerprogramm und/oder ein entsprechender Steuercode automatische generiert oder geändert wird.

3. Eingabeverfahren nach Anspruch 2,
**dadurch gekennzeichnet,**
**dass** in die Diagramme für Weg-Zeit-Verläufe Achspositionierabschnitte (POS1, POS2) und/oder Achsgleichlaufabschnitte (GEAR) eingetragen werden.

4. Eingabeverfahren nach einem der vorstehenden Ansprüche,
**dadurch gekennzeichnet,**
**dass** mit den Eingabehilfsmitteln (M, T, TL) Symbole für Kontrollanweisungen für die die Weg-Weg-Beziehungen in die Diagramme eingetragen werden.

5. Eingabeverfahren nach einem der Ansprüche 2 ,3 oder nach Anspruch 4 im Rückbezug auf Anspruch 2,
**dadurch gekennzeichnet,**
**dass** mit den Eingabehilfsmitteln (M, T, TL) Symbole für Kontrollanweisungen für die Weg-Zeit-Verläufe in die Diagramme eingetragen werden.

6. Eingabeverfahren nach Anspruch 4 oder 5,
**dadurch gekennzeichnet,**
**dass** die in den Kontrollsymbolen hinterlegte Steuerungsinformation mit den Eingabehilfsmitteln (M, T, TL) in einem Teil- oder einem Unterbild korrelierend zu den Diagrammen visualisierbar sind.

7. Eingabeverfahren nach einem der Ansprüche 2, 3, 5 oder 6,
**dadurch gekennzeichnet,**
**dass** die erste und/oder zweite und/oder dritte Ableitung der Weg-Zeit-Verläufe steuerungsseitig auf dem Bildschirm (MR) visualisiert werden.

8. Eingabeverfahren nach Anspruch 7,
**dadurch gekennzeichnet,**
**dass** jeweils eine der visualisierten Ableitungen mit den Eingabehilfsmitteln durch Umzeichnen bearbeitet wird und die Auswirkungen auf die anderen zugehörigen Ableitungen sowie auf den Ausgangs-Weg-Zeit-Verlauf für die Steuerung visualisiert wird.

9. Eingabeverfahren nach einem der Ansprüche 2,3 oder 5 bis 7,
**dadurch gekennzeichnet,**
**dass** in einem Gesamtschaubild mehrere bis alle Weg-Zeit-Verläufe in einer zeitsynchronen Darstellung in einem Teilbild oder einem Unterbild und dabei auch mehrere bis alle Weg-Weg-Beziehungen visualisiert werden und mit den Eingabehilfsmittel korrelierbar sind.

10. Eingabeverfahren nach einem der vorstehenden Ansprüche,
**dadurch gekennzeichnet,**
**dass** dem Anwender kontextabhängig eine Toolleiste (TL) mit verschiedenen Zeichenelementen zum Eintragen der Weg-Weg-Beziehungen bereitgestellt wird.

11. Eingabeverfahren nach einem der Ansprüche 2, 3, 5 bis 9 oder nach Anspruch 10 im Rückbezug auf Anspruch 2,
**dadurch gekennzeichnet,**
**dass** dem Anwender kontextabhängig eine Toolleiste (TL) mit verschiedenen Zeichenelementen zum Eintragen der Weg-Zeit-Verläufe bereitgestellt wird.

12. Eingabeverfahren nach einem der vorstehenden Ansprüche,
**dadurch gekennzeichnet,**
**dass** bei den Weg-Weg-Beziehungen Punkte (P1, P2) und/oder Bereiche (SP1, SP2) qualitativ vorbestimmter Synchronität ein tragbar sind

13. Eingabeverfahren nach einem der vorstehenden Ansprüche,
**dadurch gekennzeichnet,**
**dass** zusätzlich zu Weg-Weg-Beziehungen beliebig andere systemimmanente Beziehungen von bis zu drei Größen als Leerdiagramm anzeigbar sind.

14. Eingabeverfahren nach einem der Ansprüche 2, 3, 5 bis 9, 11 oder nach Anspruch 12 im Rückbezug auf Anspruch 2,
**dadurch gekennzeichnet,**
**dass** zusätzlich zu Weg-Zeit-Verläufen beliebig andere systemimmanente Beziehungen von bis zu drei Größen als Leerdiagramm anzeigbar sind.

15. Eingabeverfahren nach einem der vorhergehenden Ansprüche,
**dadurch gekennzeichnet,**
**dass** eine automatische Überwachung und/oder Visualisierung von Verstößen von Grenzwerten in den Weg-Weg-Beziehungen erfolgt.

16. Eingabeverfahren nach einem der Ansprüche 2,3 , 5 bis 9 oder 11, 12, 14, oder nach Anspruch 15 im Rückbezug auf Anspruch 2
**dadurch gekennzeichnet,**
**dass** eine automatische Überwachung und/oder Visualisierung von Verstößen von Grenzwerten in den Weg-Zeit-Verläufen erfolgt.

## Claims

1. Input method for programming axial movements for industrial controllers, having both manual input devices and a screen to display the input procedure and resulting processes, **characterised by** the following successive steps:
a) at least one editable blank diagram of displacement/displacement relationships is displayed to the user for at least one pair of leading and following axes,
b) the displacement limits and/or displacement units are defined as required,
c) the displacement/displacement relationship is input in the diagram using the input devices (M, K, TB),
d) the control programme (P) and/or the control code for the production process is/are generated by the controller (C) according to steps a to c,
with edited changes impacting automatically on the control programme (P) and the control code.

2. Input method according to claim 1,
**characterised in that** a further editable blank diagram is displayed to the user for displacement/time profiles of each axis, displacement and time limits and/or displacement and time units are defined as required and displacement/time profiles are input in the further diagram and a corresponding control programme and/or a corresponding control code is/are automatically generated or modified.

3. Input method according to claim 2,
**characterised in that** axial positioning sections (POS1, POS2) and/or axial synchronous operation sections (GEAR) are input in the diagrams for displacement/time profiles.

4. Input method according to one of the preceding claims,
**characterised in that** symbols for control instructions for the displacement/displacement relationships are input in the diagrams using the input devices (M, K, TB).

5. Input method according to one of claims 2, 3 or according to claim 4 with reference to claim 2,
**characterised in that** symbols for control instructions for the displacement/time profiles are input in the diagrams using the input devices (M, K, TB).

6. Input method according to claim 4 or 5,
**characterised in that** the control information contained in the control symbols can be displayed in a partial or sub-image correlated to the diagrams using the input devices (M, K, TB).

7. Input method according to one of claims 2, 3, 5 or 6,
**characterised in that** the first and/or second and/or third derivative of the displacement/time profiles are displayed on the screen (MR) at the control end.

8. Input method according to claim 7,
**characterised in that** one of the displayed derivatives in each instance is processed by redrawing using the input devices and the impact on the other associated derivatives and on the output displacement/time profiles for the controller is displayed.

9. Input method according to one of claims 2, 3 or 5 to 7,
**characterised in that** some or all of the displacement/time profiles are displayed in a time-synchronous manner in a partial or sub-image in an overall image and some or all of the displacement/displacement relationships are thereby also displayed and can be correlated using the input devices.

10. Input method according to one of the preceding claims,
**characterised in that** the user is provided with a toolbar (TB) with various character elements as a function of context to input the displacement/displacement relationships.

11. Input method according to one of claims 2, 3, 5 to 9 or according to claim 10 with reference to claim 2,
**characterised in that** the user is provided with a toolbar (TB) with various character elements as a function of context to input the displacement/time profiles.

12. Input method according to one of the preceding claims,
**characterised in that** points (P1, P2) and/or areas (SP1, SP2) of qualitatively predefinable synchronicity can be input in the displacement/displacement relationships.

13. Input method according to one of the preceding claims,
**characterised in that** any other relationships of up to three variables inherent in the system can be displayed as the blank diagram in addition to displacement/displacement relationships.

14. Input method according to one of claims 2, 3, 5 to 9, 11 or according to claim 12 with reference to claim 2,
**characterised in that** any other relationships of up to three variables inherent in the system can be displayed as the blank diagram in addition to displacement/time profiles.

15. Input method according to one of the preceding claims,
**characterised in that** violations of limit values in the displacement/displacement relationships are monitored and/or displayed automatically.

16. Input method according to one of claims 2, 3, 5 to 9 or 11, 12, 14 or according to claim 15 with reference to claim 2,
**characterised in that** violations of limit values in the displacement/time profiles are monitored and/or displayed automatically.

## Revendications

1. Procédé de saisie de données pour la programmation de mouvements d'essieux l'un au-dessous de l'autre pour des dispositifs de commandes industriels qui, en plus de moyens de saisie de données manuels, comportent un écran pour la visualisation du procédé de saisie de données et pour l'affichage des opérations résultantes,
**caractérisé par** les étapes successives suivantes :
a) au moins un diagramme vide éditable pour des relations déplacement-déplacement est indiqué à l'utilisateur pour au moins un couple d'essieu-guide et d'essieu-suiveur,
b) les limites de déplacement et/ou les unités de déplacement sont fixées en cas de besoin,
c) la relation déplacement-déplacement est tracée sur le diagramme à l'aide des moyens (M, T, TL) de saisie de données,
d) le programme (SP) de commande et/ou le code de commande pour le processus de production sont générés par le dispositif (ST) de commande conformément aux étapes a à c,
où des modifications éditées se répercutent automatiquement sur le programme (SP) de commande ou sur le code de commande.

2. Procédé de saisie de données selon la revendication 1,
**caractérisé en ce qu'**un
autre diagramme vide éditable pour des courbes déplacement-temps pour à chaque fois un essieu est indiqué à l'utilisateur, des limites de déplacement et de temps et/ou des unités de déplacement et de temps sont fixées en cas de besoin et des courbes déplacement-temps sont tracées sur l'autre diagramme et ensuite qu'un programme de commande approprié et/ou un code de commande approprié est généré ou modifié automatiquement.

3. Procédé de saisie de données selon la revendication 2,
**caractérisé en ce que**
des intervalles (POS1, POS2) de positionnement d'essieux et/ou des intervalles (GEAR) de synchronisme d'essieux sont enregistrés sur les diagrammes pour des courbes déplacement-temps.

4. Procédé de saisie de données selon l'une des revendications précédentes,
**caractérisé en ce que**
des symboles pour des instructions de contrôle pour les relations déplacement-déplacement sont enregistrés sur les diagrammes à l'aide des moyens (M, T, TL) de saisie de données.

5. Procédé de saisie de données selon l'une des revendications 2, 3 au selon la revendication 4 en se référant à la revendication 2,
**caractérisé en ce que**
des symboles pour des instructions de contrôle pour les courbes déplacement-temps sont enregistrés sur les diagrammes à l'aide des moyens (M, T, TL) de saisie de données.

6. Procédé de saisie de données selon la revendication 4 ou 5,
**caractérisé en ce que**
l'information de commande déposée dans les symboles de contrôle peut être visualisée sur une partie d'une figure ou sur une sous-figure en corrélation avec les diagrammes à l'aide des moyens (M, T, TL) de saisie de données.

7. Procédé de saisie de données selon l'une des revendications 2, 3, 5 ou 6,
**caractérisé en ce que**
la première et/ou la deuxième et/ou la troisième dérivée des courbes déplacement-temps peuvent être visualisées sur l'écran (MR) du côté du dispositif de commande.

8. Procédé de saisie de données selon la revendication 7,
**caractérisé en ce que**
à chaque fois une des dérivées visualisées est retracée à l'aide des moyens de saisie de données et les répercussions sur les autres dérivées correspondantes ainsi que sur la courbe déplacement-temps initiale sont visualisées pour le dispositif de commande.

9. Procédé de saisie de données selon l'une des revendications 2, 3 ou 5 à 7,
**caractérisé en ce que**
plusieurs à toutes les courbes déplacement-temps sont visualisées sur une représentation synchrone par rapport au temps sur une partie d'une figure ou sur une sous-figure et pour ce faire plusieurs à toutes les relations déplacement-déplacement sont aussi visualisées sur une représentation graphique globale et peuvent être corrélées à l'aide des moyens de saisie de données.

10. Procédé de saisie de données selon l'une des revendications précédentes,
**caractérisé en ce que**
une barre (TL) d'outils avec différents éléments de dessin est mise à la disposition de l'utilisateur en fonction du contexte pour l'enregistrement des relations déplacement-déplacement.

11. Procédé de saisie de données selon l'une des revendications 2, 3, 5 à 9 ou selon la revendication 10 en se référant à la revendication 2,
**caractérisé en ce que**
une barre (TL) d'outils avec différents éléments de dessin est mise à la disposition de l'utilisateur en fonction du contexte pour l'enregistrement des courbes déplacement-temps.

12. Procédé de saisie de données selon l'une des revendications précédentes,
**caractérisé en ce que**
des points (P1, P2) et/ou des intervalles (SP1, SP2) dont le synchronisme peut être prédéterminé qualitativement peuvent être enregistrés pour les relations déplacement-déplacement.

13. Procédé de saisie de données selon l'une des revendications précédentes,
**caractérisé en ce que**
un nombre quelconque d'autres relations immanentes au système de jusqu'à trois variables peut être affiché en tant que diagramme vide en plus des relations déplacement-déplacement.

14. Procédé de saisie de données selon l'une des revendications 2, 3, 5 à 9, 11 ou selon la revendication 12 en se référant à la revendication 2,
**caractérisé en ce que**
un nombre quelconque d'autres relations immanentes au système de jusqu'à trois variables peut être affiché en tant que diagramme vide en plus des courbes déplacement-temps.

15. Procédé de saisie de données selon l'une des revendications précédentes,
**caractérisé en ce que**
une surveillance et/ou une visualisation automatique du non-respect de valeurs limites est effectuée sur les relations déplacement-déplacement.

16. Procédé de saisie de données selon l'une des revendications 2, 3, 5 à 9 ou 11, 12, 14, ou selon la revendication 15 en se référant à la revendication 2,
**caractérisé en ce que**
une surveillance et/ou une visualisation automatique du non-respect de valeurs limites est effectuée sur les courbes déplacement-temps.
